Europäisches Patentamt

**European Patent Office**

Office européen des brevets

(19)

(11) Numéro de publication: **0 034 085**
**B1**

(12) **FASCICULE DE BREVET EUROPEEN**

(45) Date de publication du fascicule du brevet: **28.03.84**

(21) Numéro de dépôt: **81400129.3**

(22) Date de dépôt: **29.01.81**

(51) Int. Cl.³: **F 02 G 3/00, F 02 B 53/08,**
**F 01 C 1/07, F 01 C 11/00**

(54) Générateur de gaz à variation de volume.

(30) Priorité: **06.02.80 FR 8002540**

(43) Date de publication de la demande:
**19.08.81 Bulletin 81/33**

(45) Mention de la délivrance du brevet:
**28.03.84 Bulletin 84/13**

(84) Etats contractants désignés:
**DE FR GB**

(56) Documents cités:
**BE - A - 861 936**
**DE - B - 1 075 381**
**FR - A - 682 429**
**US - A - 2 075 654**
**US - A - 2 349 848**
**US - A - 3 807 168**

(73) Titulaire: **SOCIETE NATIONALE D'ETUDE ET DE**
**CONSTRUCTION DE MOTEURS D'AVIATION,**
**"S.N.E.C.M.A."**
**2 Boulevard Victor**
**F-75015 Paris (FR)**

(72) Inventeur: **Menioux, Claude Charles Félix**
**26, 28 Grande Rue Charles de Gaulle**
**F-94130 Nogent sur Marne (FR)**

(74) Mandataire: **Moinat, François et al,**
**S.N.E.C.M.A. Service des Brevets Boîte Postale 81**
**F-91003 Evry Cedex (FR)**

Courier Press, Leamington Spa, England.

## Générateur de gaz à variation de volume

La présente invention a pour objet un générateur de gaz à variation de volume.

Parmi les moteurs thermiques qui transforment l'énergie thermique fournie par le carburant en énergie mécanique, il faut distinguer deux grandes classes de moteurs:

— les moteurs à flux continu du type à turbine à gaz qui fonctionnent suivant le cycle de Joule,
— les moteurs volumétriques où la compression et la détente sont obtenues par variation de volume et qui fonctionnent suivant le cycle Beau de Rochas (moteurs à essence) ou Diesel.

Aucun des moteurs appartenant à ces deux classes n'est parfaitement satisfaisant:

— les moteurs à flux continu ont, sur les autres, l'avantage de la légèreté, ce qui les fait généralement préférer pour les moteurs aéronautiques, mais ont une consommation spécifique élevée, de l'ordre de 200 g par cheval/heure pour les grosses turbines à gaz, chiffre qui peut monter à 300, voire plus, pour les turbines à gaz de petites dimensions,
— les moteurs volumétriques à essence et Diesel sont lourds et encombrants, inconvénient grave mais généralement acceptable pour les moteurs terrestres, du fait de leur consommation spécifique faible (les moteurs Diesel peuvent avoir des consommations spécifiques de l'ordre de 150 g par' cheval/heure).

Les différences de consommation spécifique entre les moteurs à flux continu et les moteurs volumétriques dont il est fait état ci-dessus correspondent au régime maximal continu des deux types de machines. Ces différences sont encore augmentées si l'on considère les régimes partiels où les moteurs à flux continu ont une consommation spécifique qui augmente rapidement lorsqu'on diminue la charge, les moteurs Diesel, au contraire, ayant une consommation spécifique peu différente et quelquefois même améliorée lorsqu'on diminue la charge.

Les moteurs volumétriques rotatifs permettent d'obtenir une réduction importante de l'encombrement et de la masse par rapport aux moteurs classiques à pistons tout en conservant l'excellent rendement de ce type de moteur, pour les raisons exposées dans la demande de brevet français déposée par la Demanderesse sous le No. 80.02539, le 6.02.1980.

Le brevet US—A—2 349 848 décrit également un exemple de machine volumétrique à pistons rotatifs utilisable comme moteur, pompe ou compresseur. Ce brevet recherche un chevauchement des phases de combustion en choisissant un nombre impair de pistons et adopte une disposition, concentrique des pistons et du système d'entraînement qui résulte de ces choix et conduit à un accroissement de diamètre imposant une limitation du régime.

La demande de brevet, précitée notamment, décrit des moteurs volumétriques rotatifs comprenant un carter fixe délimitant une chambre annulaire dans laquelle sont montés rotatifs dans le même sens des pistons qui sont reliés diamétralement par paire au moyen d'un bras et animés de plus d'une variation de vitesse cyclique engendrant une variation de volume de l'espace délimité par les faces radiales des pistons, lesdits espaces entre les pistons constituant des chambres d'un moteur fonctionnant suivant un cycle à quatre temps.

L'espace annulaire dans lequel se déplacent les pistons est délimité par le carter et une couronne rotative présentant des lumières, dans lesquelles sont engagés les bras et qui permettent un débattement angulaire des bras pour le rapprochement et l'éloignement des pistons, ladite couronne constituant l'arbre moteur de sortie ou étant reliée à celui-ci et étant reliée par un moyen de transmission aux arbres qui sont solidaires des bras portent les pistons.

Toutefois, pour les puissances élevées, par exemple supérieures à 500 ch, il serait avantageux d'utiliser ce moteur à quatre temps comme générateur de gaz destiné à alimenter une turbine libre sur laquelle est prélevé l'effort moteur.

Il est connu par le brevet DE—B—1 075 381 d'alimenter un moteur volumétrique par un compresseur, la puissance étant récupérée sur une turbine. Dans chaque module, les pistons sont disposés dans un cylindre annulaire et se déplacent suivant un mouvement alternatif deux par deux. La transmission est effectuée par des arbres reliés aux pistons par des disques. Toutefois, dans cette disposition, le moteur doit obligatoirement fonctionner suivant un cycle à deux temps, ce qui amène un rendement thermique inférieur.

Le but de la présente invention est principalement d'obtenir un générateur de gaz du type dans lequel le rapport volumétrique de compression est supérieur au rapport volumétrique de détente et pour lequel les perfectionnements permettent d'obtenir un bon rendement thermique et les caractéristiques permettent d'augmenter le régime, de réduire la masse et l'encombrement.

Conformément à la présente invention, le générateur de gaz comprend au moins un module constituant un moteur thermique fonctionnant suivant un cycle à quatre temps pour la production de gaz, accouplé à un module constituant un compresseur d'air fonctionnant suivant un cycle à deux temps et alimentant le moteur thermique générateur de gaz chauds comprimés, lesdits modules comprenant un carter fixe délimitant un espace annulaire dans lequel sont montés rotatifs dans le même sens des pistons au nombre de quatre par module qui sont reliés diamétralement par paire au moyen de bras et animés de plus d'une variation de vitesse cyclique engendrant une variation de volume de l'espace délimité par les faces radiales des pistons, l'un des bras de chaque module étant monté sur un même arbre l'autre bras de chaque module étant monté sur un autre arbre coaxial au premier arbre, de telle sorte que les rotors des modules reliés à un seul mécanisme d'embiellage ont le même débattement angulaire et sont synchrones.

Selon un premier mode de réalisation de l'invention, le module central compresseur d'air est associé à deux modules latéraux générateurs de gaz alimentés en air sous pression par le compresseur central.

Dans la disposition suivant l'invention, l'échappement des modules latéraux s'effectue vers la turbine dans laquelle la détente des gaz peut être complète, contrairement aux moteurs alternatifs classiques.

Toutefois, il faut noter que, dans le dispositif décrit ci-dessus, le compresseur fonctionne selon un cycle à deux temps (admission-compression) et il est associé à deux générateurs de gaz à quatre temps, de telle sorte que le compresseur alimente alternativement tantôt l'un, tantôt l'autre des générateurs de gaz. Selon un second mode de réalisation de la présente invention, le générateur de gaz comprend un carter fixe dans lequel sont disposés suivant un même axe et symétriquement deux modules décalés de 90° comprenant chacun une machine thermique rotative pour la production de gaz chauds comprimés accouplés à un compresseur d'air alimentant le générateur de gaz chauds, lesdits modules étant reliés entre eux par un moyen de transmission aux arbres qui sont solidaires des bras portant les pistons.

Avec cette autre disposition, on a associé un compresseur à deux temps et un générateur de gaz à quatre temps; dans chaque module, les deux phases de compression qui s'effectuent en même temps gavent simultanément le même générateur au lieu d'alimenter alternativement un générateur, puis l'autre.

De même, dans ce mode de réalisation, sont associés deux générateurs de gaz décalés de 90° sur un même arbre et, de cette manière, on dispose de quatre éléments: deux compresseurs à deux temps et deux générateurs de gaz à quatre temps.

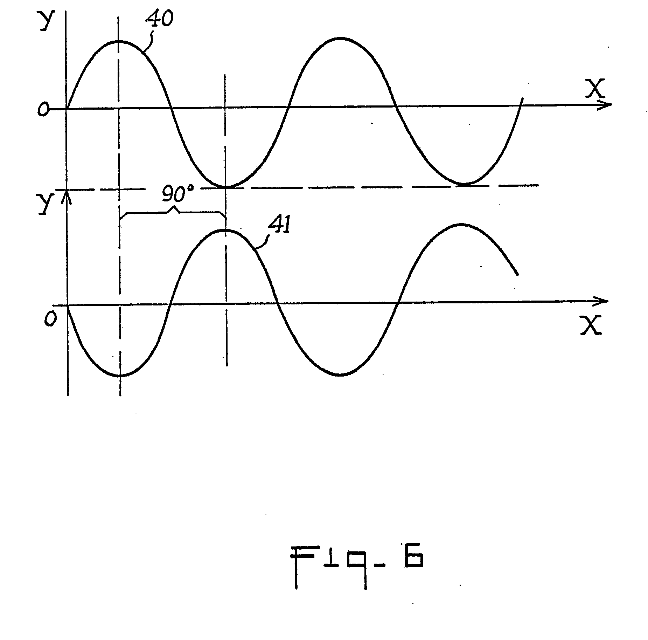

Du fait que le générateur de gaz alimente une turbine libre, le couple résistant est aussi élevé que le couple moteur. A la figure 6, on a représenté un diagramme sur lequel figurent, en abscisse, le cycle de fonctionnement du générateur et, en ordonnée, le couple moteur appliqué aux pignons. La courbe sinusoïdale 40 correspond à l'un des générateurs de gaz alors que la courbe sinusoïdale 41 correspond à l'autre générateur. On voit qu'en décalant un générateur de gaz correspondant à la courbe 40, de 90° par rapport à l'autre qui correspond à la courbe 41, le couple résultant sur les pignons est nul.

Bien entendu, on peut associer un nombre plus important de modules sur une même ligne d'arbres, par exemple trois modules décalés de 120° ou quatre décalés de 90°. Le couple serait encore plus régulier.

D'autres caractéristiques et avantages de l'invention seront mieux compris à la lecture de la description qui va suivre d'un mode de réalisation et en se référant aux dessins annexés, sur lesquels:

— la figure 1 est un schéma en vue développée d'un mode de réalisation d'un ensemble générateur de gaz à variation de volume, dans lequel la partie de ce générateur contenant les moyens de liaison n'est pas représentée;
— la figure 2 est une vue en coupe transversale de l'un des modules latéraux générateurs de gaz chauds;
— la figure 3 est une vue en coupe transversale du module de compression alimentant les générateurs de gaz;
— la figure 4 est une vue simplifiée en coupe longitudinale d'un mode de réalisation de l'ensemble générateur de gaz à variation de volume selon l'invention, chaque sous-ensemble étant ramené dans le même plan;
— la figure 5 est une vue montrant schématiquement la disposition dans le sens transversal des moyens de liaison entre les bras portant les pistons;
— la figure 6 est un diagramme représentant les couples de deux générateurs de gaz en fonction du cycle de fonctionnement;
— la figure 7 est une vue en coupe longitudinale d'un autremode de réalisation d'un générateur de gaz suivant l'invention comportant deux modules;
— la figure 8 est une vue en coupe transversale d'un générateur de gaz et d'un compresseur.

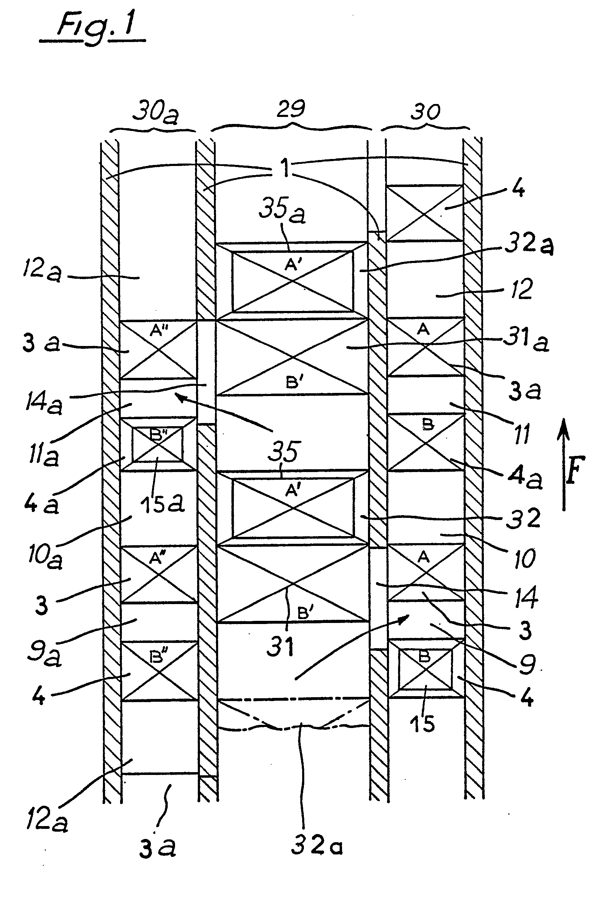

A la figure 1, on a représenté un ensemble générateur de gaz qui comprend un module central 29 de compression d'air disposé entre deux modules générateurs 30, 30a de gaz chauds, qui sont du type volumétriques rotatifs.

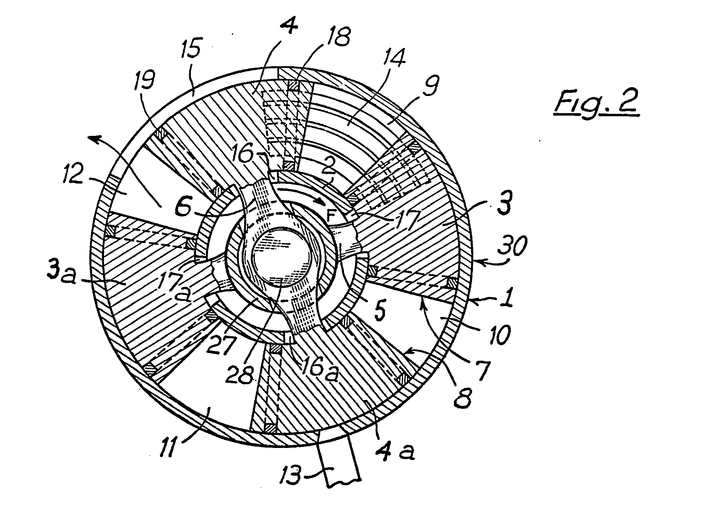

A la figure 2, on a représenté l'un des modules latéraux générateurs de gaz chauds volumétriques rotatifs, qui comporte un carter 1 extérieur fixe limitant un espace annulaire qui est fermé sur une des faces par un couvercle non représenté au dessin et, sur l'autre, par une paroi le séparant du module 29.

Ce carter 1 est représenté en un seul élément sur les dessins, dans un but de simplification, mais, bien entendu, il comporte le nombre d'éléments nécessaires pour permettre le montage.

A l'intérieur du carter 1 est disposée une couronne rotative 2 qui délimite intérieurement cet espace annulaire dans lequel se déplacent en rotation, dans le sens de la flèche F, quatre pistons 3, 3a, 4, 4a. Les pistons 3, 3a sont symétriques et reliés au moyen d'un bras 5 et les pistons 4, 4a sont reliés de la même manière par un bras 6, comme exposé en détail dans la demande de brevet français déposée par la Demanderesse sous le No. 80.02539, le 6.02.1980, précitée.

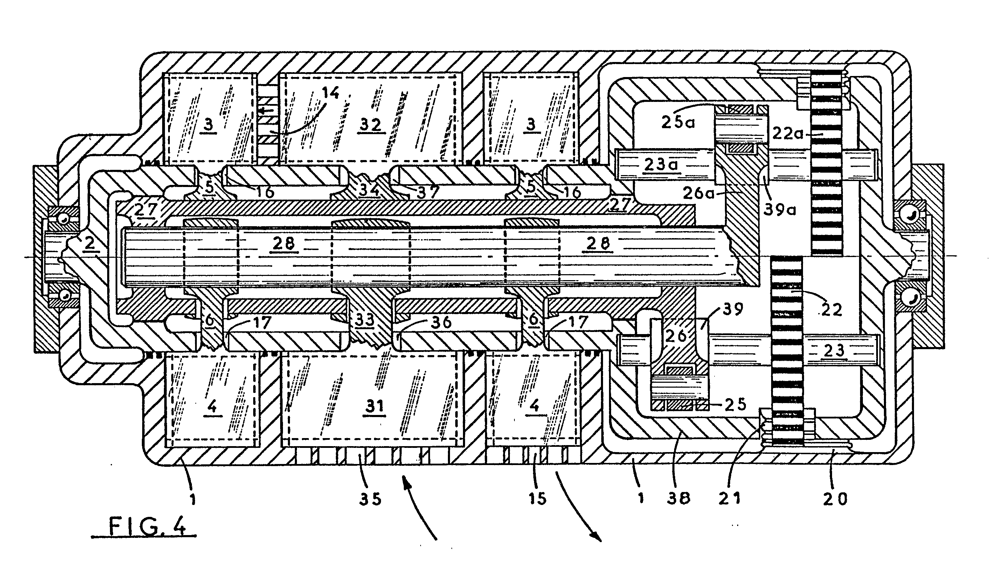

L'espace annulaire dans lequel se déplacent les pistons peut présenter une section transversale quadrangulaire comme indiqué sur la figure 4, ou circulaire, par exemple, dans les cas les plus simples ou toute combinaison de secteurs circulaires et de segments de droite notamment.

Les faces radiales 7, 8 des pistons adjacents délimitent entre elles des espaces 9, 10, 11, 12 à volume variable, qui correspondent aux chambres d'un moteur fonctionnant suivant un cycle à quatre temps.

L'ensemble constitué par la couronne 2 et les pistons 3, 3a et 4, 4a est entraîné suivant un même mouvement général rotatif suivant la flèche F, alors que les pistons 3, 3a et 4, 4a sont animés de plus d'une variation de vitesse cyclique correspondant à un mouvement d'accélération et de ralentissement de chaque bras 5, 6 qui provoque un rapprochement et un éloignement alternatifs des pistons 3, 3a et 4, 4a afin d'obtenir une variation de volume cyclique des espaces ou chambres 9, 10, 11, 12 permettant de réaliser un cycle à quatre temps. Dans la position représentée à la figure 2, la chambre 9 se trouve dans la phase d'admission, la chambre 10 dans la phase de compression, la chambre 11 dans la phase de détente et la chambre 12 dans la phase d'echappement. De cette façon, la pression des gaz en cours de détente dans l'espace 11 exerce sur la face voisine du piston 4a un effort qui passe directement sur l'autre face de ce piston, ce dernier effort étant utilisé pour comprimer le mélange combustible pour les moteurs à essence, l'air pour les moteurs Diesel, dans l'espace 10 où s'exerce la compression. Bien que les efforts sur chaque face de pistons ne soient pas rigoureusement égaux pendant cette phase de compression pour la chambre 10, de détente pour la chambre 11, pendant la durée de cette phase du cycle, ce passage direct des efforts réduit considérablement l'augmentation de masse qui existerait si le dernier effort devait être transporté par la bielle et le maneton correspondant, puis par torsion du vilebrequin, par un deuxième maneton, etc. ...., puis par une autre bielle au piston en phase de compression, comme cela se passe dans les moteurs volumétriques à pistons alternatifs.

L'allumage du mélange combustible se produit lorsque l'une des chambres, notamment la chambre 10, se présente en regard de la bougie d'allumage 13 qui est montée sur le carter 1. A noter que, dans le cas où le moteur fonctionne suivant un cycle Diesel, la bougie 13 est remplacée par un injecteur de combustible.

L'espace annulaire limité par le carter 1 et la couronne rotative 2 présente une lumière 15 d'échappement pour les gaz brûlés. Il est, d'autre part, fermé du côté du module 29 par une paroi comportant une lumière 14 pour l'admission du mélange combustible de gaz dans le cas d'un moteur à allumage ou de l'air frais dans le cas d'un cycle Diesel (pour les positions des lumières 14, 14a et 15, 15a, voir également la figure 1).

Afin de permettre le débattement angulaire des bras 5 et 6 pour le rapprochement et l'éloignement des pistons, la couronne rotative 2 comporte des lumières 16, 16a et 17, 17a.

Pour assurer l'étanchéité entre le carter extérieur fixe 1 et la couronne intérieure rotative 2 et les faces latérales lorsqu'elles existent, d'une part, et les pistons 3, 3a et 4, 4a, d'autre part, ceux-ci sont munis de joints d'étanchéité tels que 18, 19. La figure 2 représente un seul joint à chaque extrémité des pistons, mais, bien entendu, il peut y en avoir plusieurs en série. Dans le cas d'une section circulaire du carter, le plan de joint entre le carter fixe 1 et la couronne rotative 2 est situé au diamètre moyen du tore. Dans le cas d'une section rectangulaire, le carter extérieur peut comporter trois faces et des segments d'étanchéité sont placés dans la zone de raccordement de la couronne rotative intérieure 2.

Le débattement angulaire des pistons et leur longueur développée sont déterminés par le choix du taux de compression volumétrique à réaliser. On en déduit la dimension nécessaire des lumières 16, 16a et 17, 17a dans la couronne 2 pour le débattement des pistons. Les lumières d'admission et d'échappement peuvent avantageusement avoir la longueur développée correspondant à l'écartement maximal des pistons et la largeur maximale compatible avec le carter fixe.

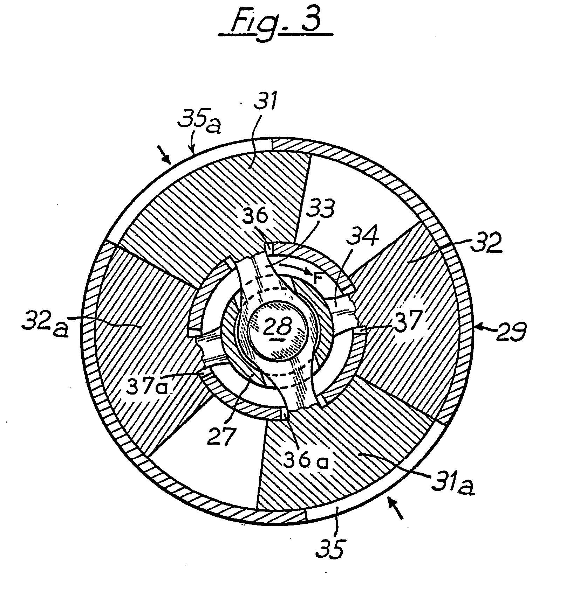

Le module central de compression représenté à la figure 3, qui fonctionne suivant un cycle à deux temps, est réalisé de façon analogue à celle des modules latéraux mentionnés ci-dessus. Ce module comprend deux paires de pistons 31, 31a et 32, 32a qui sont reliés respectivement par des bras 33 et 34. Les pistons 31, 31a et 32, 32a présentent une longueur développée des secteurs, qui est choisie de telle sorte que les pistons voisins viennent en contact à la fin des phases de compression, rendant nul le volume de la chambre (contrairement aux modules latéraux 30, 30a où, à la fin des phases de compression et de détent, le volume de la chambre n'est pas nul).

Le bras 33 est fixé sur l'arbre 28 portant déjà les bras 6 des modules latéraux et le bras 34 est fixé sur l'arbre 27 portant déjà les bras 5 des modules latéraux, de cette manière, un seul arbre porte un bras de chaque module, et les trois rotors ont ainsi le même débattement angulaire et sont synchrones. Sur la figure 1, on a repéré par les mêmes lettres A, A', A", B, B', B" les pistons qui sont solidaires du même arbre.

Le module central fonctionne suivant un cycle à deux temps et il comporte deux lumières d'admission 35, 35a et deux lumières d'échappement qui correspondent aux lumières d'admission 14, 14a des modules latéraux (figures 1 et 2).

De même, afin de permettre le débattement angulaire des bras 33 et 34 pour le rapprochement et l'éloignement des pistons, la couronne rotative 2 comporte également des lumières 36, 36a et 37, 37a.

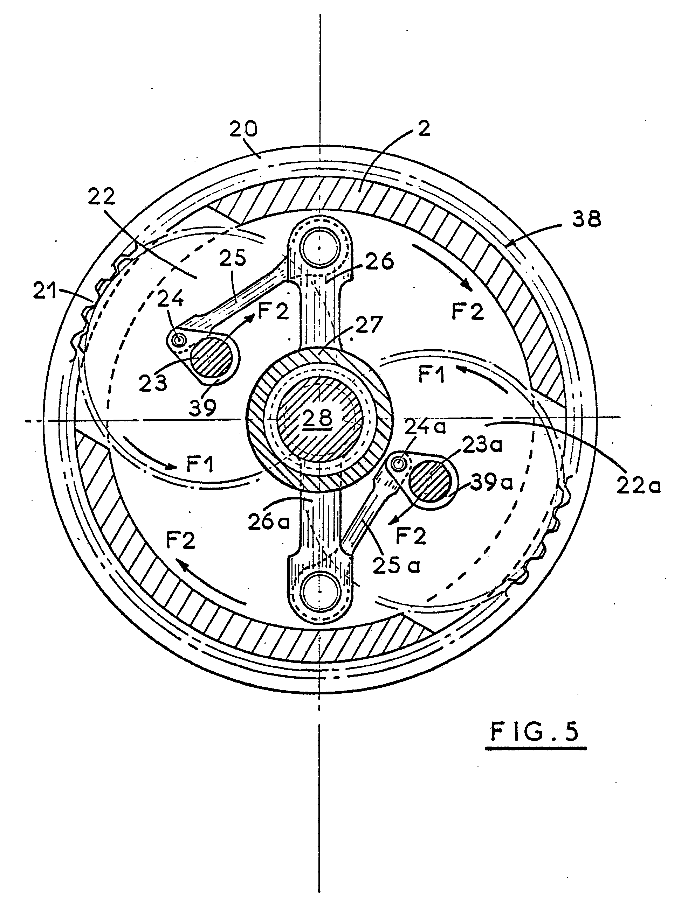

Enfin, le mécanisme d'embiellage représenté aux figures 4 et 5 est commun aux trois modules 29, 30, 30a.

Ce mécanisme comprend une couronne extérieure fixe 20 (figures 4 et 5) présentant une denture intérieure 21 avec laquelle engrènent deux pignons 22, 22a ayant un nombre de dents égal à la moitié de celui de la couronne 20. Ces pignons 22, 22a sont situés dans des plans différents et ils n'engrènent pas l'un avec l'autre. Sur une cage d'écureuil 38, solidaire de la couronne 2, sont prévus des axes 23, 23a diamétralement opposés, sur lesquels sont montés rotatifs les pignons 22, 22a et auxquels est relié par un maneton 39, 39a un axe excentré 24, 24a sur lequel est articulée l'une des extrémités d'une bielle 25, 25a dont l'autre extrémité est articulée sur un autre maneton 26, 26a.

Les manetons 26, 26a sont respectivement solidaires des arbres 27, 28 qui portent les bras 5 et 6 entraînés par les pistons 3, 3a et 4, 4a des modules latéraux ainsi que les bras 34, 33 qui entraînent les pistons 32, 32a, 31, 31a du module central.

A chaque phase active d'allumage ou de combustion des gaz, durant laquelle les pistons s'éloignent, chaque pignon 22, 22a est entraîné par la bielle correspondante 25, 25a dans le sens de la flèche F1. Les axes des pignons étant solidaires de la couronne 2 et, du fait de l'engrènement des pignons 22, 22a sur la couronne extérieure fixe 20, la couronne 2 tourne suivant la flèche F2, donc dans le sens contraire de celui de la rotation sur eux-mêmes des pignons 22 et 22a. Cette disposition permet de synchroniser le fonctionnement des pistons qui se déplacent en rotation dans la même direction, représentée par la flèche F à la figure 1.

Ainsi qu'il est visible à la figure 1, les pistons 3, 3a et 4, 4a du module 30 sont dans une position pour laquelle la chambre 9 est en phase d'admission, la chambre 10 en phase de compression, la chambre 11 en phase de détente et la chambre 12 en phase d'échappement.

L'admission des gaz comprimés s'effectue par le lumière 14, alors que les pistons 32a et 31 du module central 29 se rapprochent l'un de l'autre pour comprimer l'air d'admission qui entre dans la chambre 9 du module latéral 30.

Par contre, les pistons 3, 3a et 4, 4a du module latéral 30a sont dans une position pour laquelle la chambre 9a est en phase de détente, la chambre 10a est en phase d'échappement, la chambre 11a est en phase d'admission et la chambre 12a est en phase de compression.

L'admission des gaz comprimés s'effectue par la lumière 14a alors que les pistons 32 et 31a du module central 29 se rapprochent l'un de l'autre pour comprimer l'air d'admission qui entre dans la chambre 11a du module latéral 30a. A leur sortie des lumières 15, 15a d'échappement des modules 30, 30a, les gaz chauds sous pression sont collectés vers une turbine indépendante de puissance.

La disposition des lumières ou orifices 14, 14a entre les chambres de compression du module central 29 et les chambres d'admission des modules latéraux rend préférable l'utilisation de chambres à section rectangulaire.

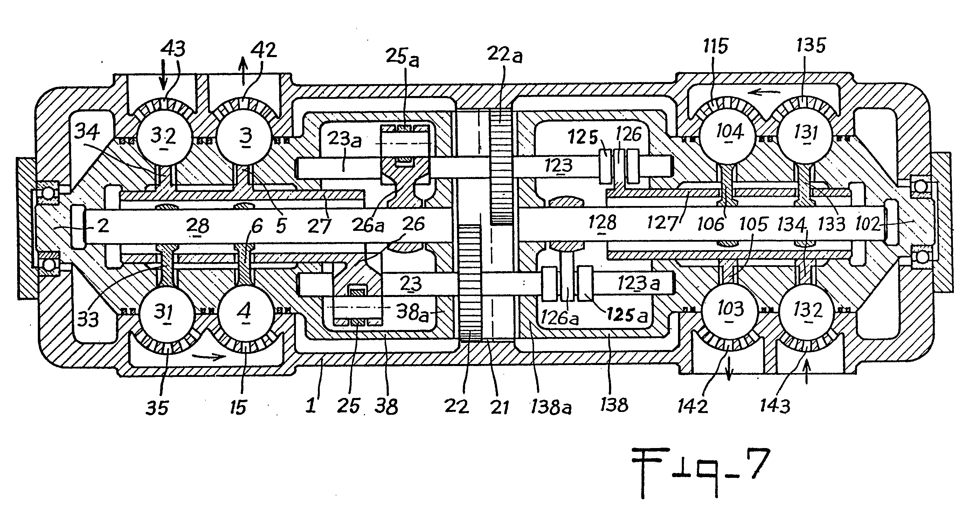

D'autres caractéristiques et avantages de l'invention seront mieux compris à la lecture de la description qui va suivre d'un autre mode de réalisation représenté sur la figure 7.

Dans ce mode de réalisation, le générateur de gaz comprend un carter fixe 1 dans lequel sont disposés, suivant un même axe et symétriquement, deux générateurs élémentaires comprenant chacun un moteur thermique rotatif pour la production de gaz chauds comprimés, accouplé à un compresseur d'air alimentant le moteur thermique.

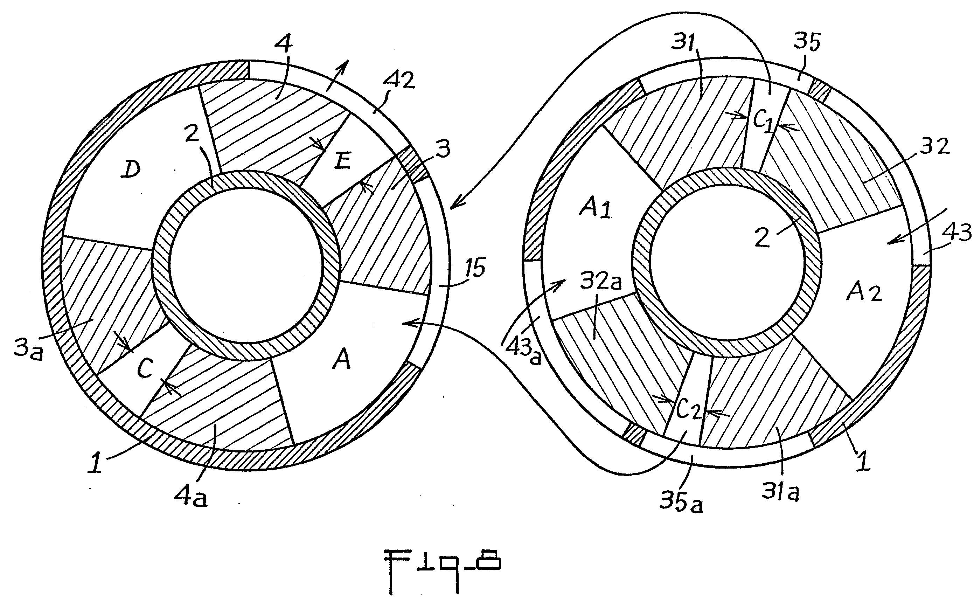

A la figure 8, on a représenté l'un des générateurs élémentaires comprenant un compresseur et un moteur thermique. Le compresseur comportant les pistons 31, 32, 31a, 32a, présente deux chambres A1, A2 en phase d'admission et deux chambres C1, C2 en phase de compression. Le moteur thermique comportant les pistons 3, 4, 3a, 4a présente des chambres A—C—D—E qui sont respectivement en phase d'admission, de compression, de détente et d'échappement.

Les deux chambres C1, C2 en compression, de chaque compresseur à deux temps, suralimentant simultanément une chambre A en phase d'admission du moteur thermique à quatre temps alors que dans la configuration précédente, la chambre $C_1$ suralimentait l'un des moteurs et la chambre $C_2$ l'autre moteur.

Dans l'association de deux générateurs élémentaires représentée sur la figure 7, les deux pignons sont communs et les deux systèmes bielle-manivelle, provenant de chaque générateur et actionnant le même pignon, sont décalés de 90° (en prenant comme référence l'angle de rotation des pignons).

Dans chaque générateur élémentaire, le couple moyen est nul et le couple résistant est aussi élevé que le couple moteur. A la figure 6, on a représenté un diagramme sur lequel figure en abscisse, l'angle de rotation du pignon et en ordonnée, le couple appliqué aux pignons. La courbe sinusoïdale 40 correspond à l'un des générateurs de gaz élémentaires alors que la courbe sinusoïdale 41 correspond à l'autre générateur. On voit qu'en décalant un générateur de gaz correspondant à la courbe 40, de 90° par rapport à l'autre qui correspond à la courbe 41, le couple résultant sur les pignons est nul.

Bien entendu, on peut associer de part et d'autre du mécanisme décrit ci-dessus, un nombre quelconque mais égal de part et d'autre de générateurs élémentaires, décalés de 90°, alimentant une ou plusieurs turbines à gaz, le couple résultant sur les pignons sera toujours nul.

Les deux générateurs élémentaires étant identiques, le générateur de droite porte les mêmes références que le générateur de gauche augmentées d'une centaine. Chaque générateur est constitué d'un générateur de gaz chauds 3, 4 et 103, 104 accouplé à un compresseur d'air 31, 32 et 131, 132 alimentant le moteur thermique.

Comme dans la première disposition chaque module moteur comprend deux paires de pistons (dont un seul piston est représenté) 3, 4 et 103, 104 reliés radialement au moyen de deux bras 5, 6 et 105, 106 et chaque compresseur d'air comprend deux paires de pistons (dont un seul piston est représenté) 31, 32 et 131, 132 reliés radialement par paires au moyen de deux bras 33, 34 et 133, 134. Les pistons se déplacent dans un espace annulaire délimité par le carter 1 et des couronnes rotatives 2, 102 qui sont reliées dans la partie centrale du dispositif par des cages d'écureuil 38 et 138 afin de constituer un seul ensemble.

Dans la partie centrale constituée par les cages d'écureuil 38, 138 sont montés rotatifs deux arbres 23a, 123 et 23, 123a sur lesquels sont calés, respectivement, les pignons 22a et 22 qui engrènent avec une couronne dentée 21 prévue dans le carter 1. Les pignons 22, 22a communs aux deux modules sont compris entre deux parois radiales 38a, 138a qui appartiennent respectivement aux cages d'écureuil 38 et 138. L'arbre 23, 123a solidaire du pignon 22 est relié d'un côté par une bielle 25 au maneton 26 de l'arbre externe 27 sur lequel sont calés les bras 5 du générateur de gaz et 34 du compresseur et, de l'autre côté, par une bielle 125a à un autre maneton 126a de l'arbre interne 128 sur lequel sont calés les bras 106 du générateur de gaz et 133 du compresseur.

De même, l'arbre 23a, 123 solidaire du pignon 22a est relié, d'un côté, par une bielle 25a à un maneton 26a de l'arbre interne 28 sur lequel sont calés les bras 6 du générateur de gaz et 33 du compresseur et, de l'autre côté par une bielle 125 à un maneton 126 de l'arbre externe 127 sur lequel sont calés les bras 105 du générateur de gaz et 134 du compresseur.

Le maneton 26a associé à l'arbre 23a et le maneton 126 associé à l'arbre 123, qui entraînent le pignon 22a, sont décalés de 90°.

De même, le maneton 26 associé à l'arbre 23 et le maneton 126a associé à l'arbre 123a, qui entraînent le pignon 22, sont décalés de 90°.

Ainsi qu'il est visible à la figure 7, les gaz comprimés provenant de l'orifice 35, 135 du compresseur sont dirigés vers l'orifice d'admission 15, 115 du moteur thermique qui comporte également un orifice 42, 142 d'échappement des gaz chauds vers une turbine de puissance non représentée, de même que le compresseur est muni d'orifices d'admission 43, 143.

Le compresseur ayant deux chambres en phase d'admission et de compression pour chaque demi-tour de pignon 22, 22a, chaque pignon effectuant deux tours lorsque la cage d'écureuil 38, 138 effectue seulement un tour. On obtient quatre cycles complets par tour de l'arbre moteur, chaque générateur élémentaire est équivalent à un moteur huit cylindres quatre temps. Les deux générateurs élémentaires étant associées sur la même cage d'écureuil 38, 138, l'ensemble est équivalent à un moteur seize cylindres quatre temps.

De même que le moteur précédent, ce générateur peut être suralimenté comme un moteur Diesel classique, la puissance recueillie par la turbine libre pouvant servir à entraîner un petit turbocompresseur. Ce générateur de gaz peut être utilisé également pour constituer le corps haute pression d'un petit turboréacteur.

Bien entendu, diverses modifications peuvent être apportées par l'homme de l'art au dispositif qui vient d'être décrit sans sortir du cadre de l'invention.

**Revendications**

1. Générateur de gaz à variation de volume pour l'alimentation d'une turbine indépendante de puissance, caractérisé en ce qu'il comprend au moins un module (30, 30a) constituant un moteur thermique fonctionnant suivant un cycle à quatre temps pour la production de gaz chauds comprimés accouplé à un module (29) constituant un compresseur d'air fonctionnant suivant un cycle à deux temps et alimentant les moteurs thermiques (30, 30a) générateurs de gaz chauds comprimés, lesdits modules comprenant un carter fixe (1) délimitant un espace annulaire dans lequel sont montés rotatifs dans le même sens des pistons (3, 3a, 4, 4a, 31, 31a, 32, 32a) au nombre de quatre par module qui sont reliés diamétralement par paire au moyen de bras (5, 6, 33, 34) et animés de plus d'une variation de vitesse cyclique engendrant une variation de volume de l'espace délimité par les faces radiales des pistons, l'un des bras (6, 33, 6) de chaque module étant monté sur un même arbre (28), l'autre bras (5, 34, 5) de chaque module étant monté sur un autre arbre (27) coaxial au premier arbre, de telle sorte que les rotors des modules reliés à un seul mécanisme d'embiellage ont le même débattement angulaire et sont synchrones.

2. Générateur de gaz suivant la revendication 1 caractérisé en ce que un module central (29) compresseur d'air est associé à deux modules latéraux (30, 30a) moteurs thermiques générateurs de gaz.

3. Générateur de gaz suivant les revendications 1 et 2, caractérisé en ce que, dans chaque module, l'espace annulaire dans lequel se déplacent les pistons est délimité par le carter (1) et une couronne rotative (2) présentant des lumières (16, 16a, 17, 17a, 36, 36a, 37, 37a) dans lesquelles sont engagés les bras (5, 6, 33, 34) et qui permettent un débattement angulaire des bras pour le rapprochement et l'éloignement des pistons, la dite couronne rotative (2) comportant deux axes (23, 23a) diamétralement opposés, sur lesquels sont montés rotatifs deux pignons (22, 22a) décalés longitudinalement, qui engrènent avec la denture intérieure (21) d'une couronne extérieure fixe, chacun des pignons (22, 22a) ayant un nombre de dents moitié de celui de la couronne extérieure (21) fixe et portant un axe excentré (24, 24a) par rapport à son axe de rotation, et sur lequel est articulée l'une des extrémités d'une bielle (25, 25a) dont l'autre extrémité est articulée sur un maneton (26, 26a) solidaire de l'un des arbres (27, 28) portant l'une des séries de bras reliant une paire de pistons.

4. Générateur de gaz suivant l'une des revendications 1 et 2, caractérisé en ce que les modules (29, 30, 30a) présentent des chambres annulaires de section rectangulaire.

5. Générateur de gaz suivant l'une des revendications précédentes, caractérisé en ce que le module (29) constituant le compresseur d'air, comporte deux lumières (35, 35a) diamétralement opposées sur le carter extérieur (1), pour l'admission d'air, et une lumière (14, 14a) sur au moins une face latérale le séparant des modules (30, 30a) constituant des machines thermiques rotatives pour l'échappement de l'air comprimé.

6. Générateur de gaz à variation de volume pour l'alimentation d'une turbine indépendante de puissance suivant la revendication 1, caractérisé en ce qu'il comprend un carter fixe (1) dans lequel sont disposés suivant un même axe et symétriquement deux générateurs élémentaires comprenant chacun une machine thermique rotative (3, 4 et 103, 104) pour la production de gaz chauds comprimés accouplés à un compresseur (31, 32 et 131, 132) d'air alimentant le moteur thermique, lesdits générateurs élémentaires étant reliés entre eux par un moyen de transmission constitué de deux pignons (22, 22a) qui engrènent avec une couronne dentée (21) prévue dans le carter (1), chacun des pignons (22, 22a) étant solidaires d'un arbre (23, 123a et 23a, 123) entraîné, d'un côté, par un maneton (126a, 26a) solidaire de l'arbre central (128, 28) de chaque générateur sur lequel est monté l'un des bras (106, 133 et 6, 33) reliant une paire de pistons du moteur thermique et du compresseur et, de l'autre côté, par un maneton (26, 126) solidaire de l'arbre externe (27, 127) de chaque générateur sur lequel est monté l'autre des bras (5, 34 et 105, 134) reliant une paire de pistons du moteur thermique et du compresseur.

7. Générateur de gaz suivant la revendication 6, caractérisé en ce qu une couronne rotative (2, 102) de chaque générateur élémentaire délimitant l'espace annulaire dans lequel se déplacent les pistons sont reliées par une cage d'écureuil (38, 138) dont les deux parties les prolongent respectivement et sont réunies.

8. Générateur de gaz suivant la revendication 6, caractérisé en ce que le maneton (26, 26a) de l'un des générateurs élémentaires associés à un arbre portant l'un des pignons (22, 22a) est décalé de 90° par rapport à l'autre maneton (126a, 126) de l'autre générateur élémentaire.

**Patentansprüche**

1. Gaserzeuger mit positiver Verdrängung zur Speisung einer leistungsunabhängigen Turbine, gekennzeichnet durch mindestens eine Einheit (30, 30a) in Form einer Wärmekraftmaschine, die nach einem Viertaktverfahren arbeitet, zur Erzeugung verdichteter heißer Gase, gekuppelt mit einer Einheit (29) in Form eines Luftverdichters, der nach einem Zweitaktverfahren arbeitet und die Wärmekraftmaschinen (30, 30a) speist, die heisse verdichtete Gase erzeugen, welche Einheiten ein festes Gehäuse (1) besitzen, das einen ringförmigen Raum begrenzt, in welchem im gleichen Sinn drehbar vier Kolben je Einheit (3, 3a, 4, 4a, 31, 31a, 32, 32a) gelagert sind, die paarweise mittels Armen (5, 6, 33, 34) diametral verbunden und außerdem mit einer periodischen Geschwindigkeitsveränderung angetrieben werden, die eine Veränderung des Volumens des durch die radialen Flächen der Kolben begrenzten Raumes bewirken, wobei der eine der Arme (6, 33, 6) jeder Einheit auf einer gleichen Welle (28) angeordnet ist, der andere Arm (5, 34, 5) jeder Einheit auf einer anderen Welle (27) angeordnet ist, die zur ersten Welle gleichachsig ist, so daß die Rotoren der Einheiten, die mit einem einzigen Gestängemechanismus verbunden sind, den gleichen Winkelausschlag haben und synchron sind.

2. Gaserzeuger nach Anspruch 1, dadurch gekennzeichnet, daß der mittleren Luftverdichtereinheit (29) zwei seitliche Einheiten (30, 30a) in Form von Wärmekraftmaschinen-Gaserzeuger zugeordnet sind.

3. Gaserzeuger nach den Ansprüchen 1 und 2, dadurch gekennzeichnet, daß in jeder Einheit der ringförmige Raum, in welchem sich die Kolben bewegen, begrenzt ist durch das Gehäuse (1) und einen drehbaren Kranz (2), der Öffnungen (16, 16a, 17, 17a, 36, 36a, 37, 37a) aufweist, in welche sich die Arme (5, 6, 33, 34) erstrecken und welche eine Winkelbewegung der Arme zur Annäherung und Entfernung der Kolben ermöglichen, wobei der drehbare Kranz (2) zwei diametral entgegengesetzte Achsen (23, 23a) aufweist, auf welchen zwei in der Längsrichtung versetzte Ritzel (22, 22a) drehbar gelagert sind, die mit der Innenverzahnung (21) eines festen äußeren Zahnkranzes in Eingriff stehen, wobei jedes der Ritzel (22, 22a) eine Zähnezahl hat, die halb so groß wie die des festen äußeren Zahnkranzes (21) ist und eine mit Bezug auf seine Drehachse exzentrische Achse (24, 24a) trägt, an welcher das eine Ende eines Gliedes (25, 25a) angelenkt ist, dessen anderes Ende an einem Kurbelarm (26, 26a) angelenkt ist, der mit einer der Wellen (27, 28) fest verbunden ist, die einen der Reihen von Armen trägt, welche ein Kolbenpaar verbindet.

4. Gaserzeuger nach einem der Ansprüche 1 und 2, dadurch gekennzeichnet, daß die Einheiten (29, 30, 30a) ringförmige Kammern von rechteckigem Querschnitt aufweisen.

5. Gaserzeuger nach einem der vorangehenden Ansprüche, dadurch gekennzeichnet, daß die den Luftverdichter bildende Einheit (29) zwei Öffnungen (35, 35a) diametral gegenüberliegend am Außengehäuse (1) für den Luftzutritt und eine Öffnung (14, 14a) auf mindestens einer Seitenfläche aufweist, welche die Einheiten (30, 30a) trennt, die Umlaufwärmekraftmaschinen bilden, für den Austritt der verdichteten Luft.

6. Gaserzeuger mit positiver Verdrängung zur Speisung einer leistungsunabhängigen Turbine nach Anspruch 1, gekennzeichnet durch ein festes Gehäuse (1), in welchem nach einer gleichen Achse und symmetrisch zwei Erzeugerelemente angeordnet mit je einer Umlaufwärmekraftmaschine (3, 4 und 103, 104) zur Erzeugung von verdichtetem heißem Gas gekuppelt mit einem Luftverdichter (31, 32 und 131, 132), der die Wärmekraftmaschine speist, welche Erzeugerelemente miteinander durch eine Übertragungseinrichtung verbunden sind, die durch zwei Ritzel (22, 22a) gebildet wird, welche mit einem Zahnkranz (21) in Eingriff stehen, der im Gehäuse (1) vorgesehen ist, wobei jedes der Ritzel (22, 22a) mit einer Welle (23, 123a und 23a, 123) fest verbunden ist, die einerseits durch einen Kurbelarm (126a, 26a) angetrieben wird, der mit der Mittelwelle (128, 28) jedes Erzeugers fest verbunden ist, auf der einer der Arme (106, 133 und 6, 33) angeordnet, der ein Kolbenpaar der Wärmekraftmaschine und des Verdichters verbindet, und andererseits durch einen Kurbelarm (26, 126), der mit der äußeren Welle (27, 127) jedes Erzeugers fest verbunden, auf der der ander der Arme (5, 34 und 105, 134) angeordnet ist, welcher ein Kolbenpaar der Wärmekraftmaschine und des Verdichters verbindet.

7. Gaserzeuger nach Anspruch 6, gekennzeichnet durch einen drehbaren Kranz (2, 102) von jedem Erzeugerelement, der den Ringraum begrenzt, in welchem sich die Kolben bewegen, verbunden durch einen Käfig (38, 138), dessen beide Teile sie verlängern und vereinigt sind.

8. Gaserzeuger nach Anspruch 6, dadurch gekennzeichnet, daß der Kurbelarm (26, 26a) eines der Erzeugerelemente, die einer Welle zugeordnet sind, welche eines der Ritzel (22, 22a) trägt, mit Bezug auf den anderen Kurbelarm (126a, 126) des anderen Erzeugerelements um 90° versetzt ist.

## Claims

1. Variable volume gas generator for the supply of an independent power turbine, characterised in this that it comprises at least one module (30, 30a) constituting a heat engine operating on a four-stroke cycle for the production of hot compressed gas coupled to a module (29) constituting an air compressor operating on a two-stroke cycle and supplying the heat engines (30, 30a) which are generators of hot compressed gas, the said modules comprising a fixed casing (1) defining an annular space in which are rotatably mounted in the same sense pistons (3, 3a, 4, 4a, 31, 31a, 32, 32a) to the number of four per module which are diametrically connected in pairs by at least arms (5, 6, 33, 34) and actuated by more than one cyclic variation in speed giving rise to a variation in volume of the space defined by the radial faces of the pistons, one of the arms (6, 33, 6) of each module being mounted on a common shaft (28), the other arm (5, 34, 5) of each module being mounted on another shaft (27) coaxial with the first shaft, in such a manner that the rotors of the modules connected to a single linkage mechanism have the same angular clearance and are synchronised.

2. Gas generator according to claim 1 characterised in this that a central, air-compressor, module (29) is associated with two lateral, gas generator, modules (30, 30a).

3. Gas generator according to claims 1 and 2, characterised in this that, in each module, the annular space in which the pistons move is defined by the casing (1) and a rotary ring (2) having openings (16, 16a, 17, 17a, 36, 36a, 37, 37a) in which the arms (5, 6, 33, 34) are engaged and which enable angular spacing of the arms for motion towards and motion away from one another of the pistons, the said rotary ring (2) comprising two diametrically-opposed shafts (23, 23a) on which two, longitudinally spaced, pinions (22, 22a) are rotatably mounted, which engage with the internal teeth (21) of an outer fixed ring, each of the pinions (22, 22a) having a number of teeth equal to one half of that of the fixed outer ring (21) and supporting a shaft (24, 24a) eccentric with respect to its axis of rotation, and on which is pivoted one of the ends of a rod (25, 25a) of which the other end is pivoted on a crank-pin (26, 26a) rigid with one of the shafts (27, 28) carrying one of the series of arms connecting one pair of pistons.

4. Gas generator according to one of claims 1 and 2, characterised in this that the modules (29, 30, 30a) have annular chambers of rectangular section.

5. Gas generator according to one of the preceding claims, characterised in this that the module (29) constituting the air compressor comprises two diametrally opposed ports (35, 35a) in the external casing (1), for the admission of air, and one port (14, 14a) on at least one lateral face separating the modules (30, 30a) constituting rotary heat engines for the delivery of compressed air.

6. Gas generator of variable volume for the supply of an independent power turbine according to claim 1, characterised in this that it comprises a fixed casing (1) in which are disposed on a common axis and symmetrically two elementary generators each comprising a rotary heat engine (3, 4 and 103, 104) for the production of hot compressed gas coupled to a compressor (31, 32 and 131, 132) for air supplying the heat engine, the said elementary generators being interconnected by transmission means constituted by two pinions (22, 22a) which mesh with a toothed ring (21) provided within the casing (1), each of the pinions (22, 22a), being rigid with a shaft (23, 123a and 23a, 123) driven, on the one hand by a crank pin (126a, 26a) rigid with the central shaft (128, 28) of each generator on which is mounted one of the arms (106, 133 and 6, 33) connecting one pair of heat engine pistons and of the compressor and on the other hand, by a crank pin (26, 126) rigid with the outer shaft (27, 127) of each generator on which is mounted the other of the arms (5, 34 and 105, 134) connecting one pair of pistons of the heat engine and of the compressor.

7. Gas generator according to claim 6, characterised by a rotary ring (2, 102) of each elementary generator defining the annular space in which the pistons move are connected by a squirrel cage (38, 138) of which the two parts effectively prolong them and are interconnected.

8. Gas generator according to claim 6, characterised in this that the crank pins (26, 26a) of one of the associated elementary generators is a shaft carrying one of the pinions (22, 22a) is offset by 90° with respect to the other crank pin (126a, 126) of the other elementary generator.

**_Fig.1_**

Fig. 2

# Fig. 3

FIG.4

FIG.5

Fig. 6

Fig-7

Fig. 8